# EUROPÄISCHE PATENTANMELDUNG

(11) **EP 1 988 289 A1**
(43) Veröffentlichungstag der Anmeldung: **05.11.2008**
(21) Anmeldenummer: 08007613.6
(22) Anmeldetag: 18.04.2008
(51) Int. Cl.: F04C 2/107, F04C 15/00

(54) **Schnittstelle**

(30) Priorität: 03.05.2007 DE 102007021133
(71) Anmelder: KNOLL MASCHINENBAU GMBH, 88348 Saulgau (DE)
(72) Erfinder: Lautenschläger, Johannes, 88348 Bad Saulgau-Heratskirch (DE)
(74) Vertreter: Roth, Klaus

(57) **Zusammenfassung**

Es wird eine Exzenterschneckenpumpe mit einem eine Motorantriebswelle umfassenden Antriebsmotor (9) zum Antreiben einer wenigstens eine Schneckenrotorwelle (6) aufweisenden Rotoreinheit, wobei wenigstens eine Verbindungsvorrichtung (10) zum Verbinden zweier, um eine Drehachse drehende Wellen (5, 6, 8, 18), insbesondere der Motorantriebswelle mit der Rotoreinheit, vorgesehen ist,
wobei die Verbindungsvorrichtung (10) wenigstens ein quer zur Drehachse und in Richtung einer Längsachse ausgerichtetes sowie wenigstens teilweise eine der Wellen (5, 6, 8, 18) durchsetzendes Verbindungselement (20) aufweist, wobei wenigstens eine der Wellen (5, 6, 8, 18) mindestens eine Ausnehmung (40) zur wenigstens teilweisen Aufnahme des Verbindungselementes (20) aufweist, vorgeschlagen, die im Vergleich zum Stand der Technik besser herstellbar bzw. montierbar ist. Dies wird erfindungsgemäß dadurch erreicht, dass das Verbindungselement (20) und/oder die Ausnehmung (40) der Welle (5, 6, 8, 18) eine gegenüber der Lage der längsachse des Verbindungselementes (20) in montierter Position des Verbindungselementes (20) derart geneigte Kontaktfläche (25) aufweist, dass dadurch beim Einbringen des Verbindungselementes (20) in die Ausnehmung (40) der Welle (5, 6, 8, 18) eine Relativkraft zwischen Verbindungselement (20) und Welle (5, 6, 8, 18) mit einer Komponente in Richtung der Drehachse der Welle (5, 6, 8, 18) generierbar ist.

## Beschreibung

### Stand der Technik

Die Erfindung betrifft eine Exzenterschneckenpumpe nach dem Oberbegriff des Anspruchs 1.

Zur Förderung von flüssigem bzw. viskosem Fördergut sind eine Vielzahl von Verdrängerpumpen bekannt. Für eine Reihe von Einsatzfällen, in denen insbesondere scherempfindliche Medien schonend gefördert werden müssen, finden Exzenterschneckenpumpen bzw. sogenannte Mohnopumpen Verwendung. Die Exzenterschneckenpumpe weist einen als eingängige Schnecke ausgebildeten Rotor auf, der sich in einem feststehenden Stator mit einem Hohlvolumen in Form einer zweigängigen Schnecke dreht, wobei der Rotor über eine Gelenkwelle mit dem Antrieb verbunden ist. Die sich auf Grund der Gangunterschiede zyklisch öffnenden und schließenden Kammern zwischen Rotor und Stator saugen das Fördergut an und pressen dieses auf einem schraubenförmigen Förderweg durch die Pumpe und geben das Fördergut druckseitig ab. Die Exzenterschneckenpumpe bewirkt somit eine gleichmäßige stoßfreie Förderung des Förderguts.

Die Werkstoffe der Pumpenbauteile hängen im Wesentlichen von der Art des zu fördernden Guts ab. Der Rotor besteht meist aus Stahl, wobei der Stator zum Förderraum hin in der Regel durch ein Elastomer gebildet wird.

Bei geeigneter Dimensionierung bzw. Auswahl der Pumpenbauteile kann eine besonders schonende Förderung des Förderguts erreicht werden, was insbesondere häufig in der Lebensmitteltechnik von Vorteil ist.

Außerdem werden in der Lebensmitteltechnik relativ hohe Anforderungen an die Reinigungsmöglichkeit der Exzenterschneckenpumpe gestellt, wobei eine einfache Montage bzw. Demontage der Exzenterschneckenpumpe hilfreich ist. Außerdem kann durch Austausch von Rotor bzw. Stator die Förderleistung der Exzenterschneckenpumpe in einem relativ weiten Bereich flexibel gestaltet werden.

Insbesondere beim Einsatz in der Lebensmitteltechnik ist neben der schonenden Förderung des Mediums zwingend erforderlich, dass die Gesamtanlage und somit auch die dort eingesetzte Pumpe den unverzichtbaren Hygienebestimmungen genügt.

Eine solche Pumpe muss daher, wie o.a. einer Reinigung gut zugänglich sein. Die Reinigung wird üblicherweise durch gezielten Einsatz und Kombination von mechanischen und chemischen Hilfsmitteln vorgenommen. Für die Reinigung ist die Materialauswahl sowie der konstruktive Aufbau der Pumpe von entscheidender Bedeutung. Die mit dem Fördermedium in Berührung kommenden Pumpenkomponenten müssen mit entsprechenden Materialien versehen sein, die zum einen lebensmittelverträglich und zum anderen resistent gegen entsprechende Reinigungschemikalien sind.

Der konstruktive Aufbau muss gewährleisten, dass keine Strömungstotzonen und damit die Möglichkeit für Ablagerungen und daraus folgenden Keimherden auftreten können. Die Vermeidung von Totzonen ist zum einen beim Chargenwechsel des Produkts und zum anderen auch bei der Reinigung von Bedeutung. Für die Reinigung gibt es einmal die Möglichkeit, die mit Fördermedium in Berührung kommenden Teile der Pumpe mit einem Reinigungsmedium zu durchspülen oder aber auch die Pumpe zu zerlegen und die einzelnen Komponenten einer Reinigung zu unterziehen.

Die Zerlegung der Pumpe zu Reinigungszwecken ist in entsprechenden Zeitabständen unumgänglich, nicht zuletzt auch für eine Sichtprüfung des Reinigungsergebnisses.

Für die Zerlegung der Pumpe sind entsprechende Schnittstellen sowohl im Bereich des Pumpengehäuses als auch zwischen den einzelnen Rotorelementen vorzusehen. Insbesondere die Verbindungsstellen einzelner Rotorelemente sind gefährdete Bereiche für die Entstehung von Totzonen, in denen sich nicht weitergefördertes Medium ansammeln kann. Darüber hinaus sind derartige Verbindungsstellen zwischen einzelnen Rotorelementen durch die Anordnung innerhalb des produktzugewandten Bereichs des Pumpengehäuses schlecht zugänglich und nach der Förderung eines Fördermediums durch dieses verschmutzt.

Das Montieren bzw. Zerlegen der Pumpe, insbesondere der Rotorelemente, gestaltet sich aus den zuvor genannten Gründen oftmals schwierig.

### Aufgabe und Vorteile der Erfindung

Aufgabe der Erfindung ist es demgegenüber, eine Exzenterschneckenpumpe vorzuschlagen, die im Vergleich zum Stand der Technik besser herstellbar bzw. montierbar ist.

Diese Aufgabe wird, ausgehend von einer Exzenterschneckenpumpe der einleitend genannten Art, durch die kennzeichnenden Merkmale des Anspruchs 1 gelöst. Durch die in den Unteransprüchen genannten Maßnahmen sind vorteilhafte Ausführungen und Weiterbildungen möglich.

Dementsprechend zeichnet sich eine erfindungsgemäße Exzenterschneckenpumpe dadurch aus, dass das Verbindungselement und/oder die Ausnehmung der Welle eine gegenüber der Lage der Längsachse des Verbindungselementes in montierter Position des Verbindungselementes derart geneigte Kontaktfläche aufweist, dass dadurch beim Einbringen des Verbindungselementes in die Ausnehmung der Welle eine Relativkraft zwischen Verbindungselement und Welle mit einer Komponente in Richtung der Drehachse der Welle generierbar ist.

Hiermit wird erreicht, dass eine quer zur Einbringrichtung des Verbindungselementes erzeugte Querkraft, d.h. längs der Drehachse der Welle, und somit eine Verspannung der Wellen entsteht, womit die beiden Wellen miteinander verbindbar bzw. fixierbar sind. Entsprechend wird im Vergleich zum Stand der Technik gemäß der DE 10 2005 039 618 A1 eine besonders einfache Montage und auch Demontage der beiden wellen bzw. der Verbindungsstelle gemäß der Erfindung ermöglicht.

Als besonderer Vorteil der Erfindung kann darin gesehen werden, dass vor allem Form- und Lagetoleranzen des Verbindungselementes oder der zu verbindenden Wellen nicht mehr derart exakt aufeinander abgestimmt werden müssen wie beim Stand der Technik. Dementsprechend können die jeweiligen Komponenten mit relativ großer Toleranz hergestellt werden, was zu einer besonders wirtschaftlich günstigen Herstellung der Erfindung führt.

Auch kann ein Verschleiß der Wellen bzw. der Ausnehmungen und/oder des Verbindungselementes die Verbindung der beiden Wellen nicht nennenswert beeinträchtigen. Gemäß der Erfindung werden entsprechende Abnützungen bzw. entsprechender Verschleiß durch die geneigte Kontaktfläche ausgleichbar.

Weiterhin wird beim Montagevorgang des Verbindungselementes die axiale und radiale Lage quasi von selbst in die ideale Position gebracht. Die Montageendlage des Verbindungselementes kann beispielsweise mit handelsüblichen Werkzeugen, wie z.B. einem Schraubenzieher, Innensechskant etc., erreicht werden. Entsprechend kann auch das Lösen der Schnittstelle bzw. der Verbindung der beiden Wellen mit handelsüblichem Werkzeug erfolgen.

Gemäß der Erfindung wird z.B. eine komplette manuelle Reinigung auch von größeren Pumpen sehr schnell und einfach realisierbar. Dies ist gerade im Lebensmittelbereich von wesentlicher Bedeutung.

Vorzugsweise weist das Verbindungselement wenigstens einen Endbereich mit einem die Kontaktfläche umfassenden Kugelabschnitt auf, insbesondere umfasst der Endbereich eine Kugel. Mit Hilfe eines derartigen Kugelabschnittes bzw. einer Kugel ist in besonders einfacher Weise eine geneigte Kontaktfläche gemäß der Erfindung realisierbar.

Darüber hinaus können bereits handelsübliche Kugeln z.B. mit gehärteter Oberfläche, insbesondere verchromter Oberfläche verwendet werden, die gegenüber Verschleiß bzw. Abnutzung sehr widerstandsfähig sind. Entsprechend wirtschaftlich günstig ist dies und zugleich wird eine hohe Lebensdauer gewährleistet.

In einer besonderen Weiterbildung weist das Verbindungselement wenigstens einen Endbereich mit einem die Kontaktfläche umfassenden Konus auf. Auch mit dieser alternativen Ausführungsvariante kann die geneigte Kontaktfläche gemäß der Erfindung realisiert werden.

Beispielsweise kann ein Konus einfach mittels Drehverfahren oder dergleichen generiert werden. Entsprechend vorteilhaft ist die Herstellung eines Verbindungselementes mit einem konusförmigen Endbereich. Gegebenenfalls kann der Konus ebenfalls zur Reduzierung von Verschleißerscheinungen eine gehärtete Oberfläche aufweisen, wie z.B. durch Verchromen etc..

In einer bevorzugten Variante der Erfindung ist das Verbindungselement als Schraube ausgebildet. Eine Schraube lasst sich besonders vorteilhaft längs dessen Drehachse mittels handelsüblicher Werkzeuge verstellen. Auch kann eine Schraube bzw. ein Gewinde, insbesondere ein metrisches Gewinde, durch Längsverstellung eine Selbsthemmung bzw. eine Gegenkraft aufbringen. Über die geneigte Fläche an einem Endbereich der Schraube wird hierbei die Relativkraft in Richtung der Drehachse der Welle generiert. Entsprechend einfach und dauerhaft bzw. betriebsicher ist hiermit die Erfindung realisierbar.

Darüber hinaus können beispielsweise sogenannte Kugelschrauben verwendet werden, die bereits handelsüblich sind. Entsprechend wirtschaftlich günstig ist diese Ausführungsform der Erfindung. Unter einer Kugelschraube wird im Allgemeinen eine Schraube, insbesondere eine Madenschraube, verstanden, die an einem Ende eine Kugel, insbesondere verchromte Kugel, aufweist.

Vorzugsweise ist die Ausnehmung der Welle als Sackloch ausgebildet. Bei einem Sackloch ist besonders von Vorteil, dass dies beispielsweise mittels handelsüblicher Bohrer erzeugt, bereits endseitig eine geneigte Wandung bzw. einen Endkonus aufweist, der mit der (geneigten) Kontaktfläche des Verbindungselementes wechselwirken kann.

In einer besonderen Weiterbildung der Erfindung ist das Sackloch bzw. zumindest das Ende des Sackloches als Ausnehmung in Form etwa einer Kugelhalbschale ausgebildet. Diese Form ist vor allem bei Verbindungselementen mit im Wesentlichen kugelförmigem Ende wie z.B. bei sog. Kugelschrauben, von besonderem Vorteil. Hierbei ergeben sich vorteilhafte geometrische Verhältnisse zwischen Sackloch und Verbindungselement. Vorzugsweise ist der Radius des Endes bzw. der Kugel des Verbindungselementes bzw. der Kugelschraube kleiner als der Radius der Ausnehmung bzw. des Sackloches bzw. der Kugelhalbschale. Hierdurch wird eine vorteilhafte bzw. quasi automatische Ausrichtung der zu verbindenden Komponenten realisiert, wobei in vorteilhafter weise zur Erreichung der Montageendlage unter anderem die axialen Vorspannkräfte von z.B. O-Ringabdichtungen oder dergleichen überwunden werden.

Vorteilhafterweise ist ein Versatz zwischen der Längsachse des Verbindungselementes und einem tiefsten Punkt der Ausnehmung, insbesondere des Sackloches, vorgesehen. Hierdurch ergibt sich beim Einbringen des Verbindungselementes längs dessen Längsachse quasi selbsttätig eine Querkraft bzw. Relativkraft in Richtung der Drehachse der Welle.

Vorzugsweise ist der tiefste Punkt im Wesentlichen in der Mitte der Ausnehmung angeordnet. Dies ist beispielsweise bei einem mittels handelsüblichem Bohrer hergestellten Sackloches bereits der Fall. Entsprechend wird dies mit Hilfe einer als Sackloch ausgebildeten Ausnehmung in besonders vorteilhafter Weise realisiert.

In einer bevorzugten Variante der Erfindung sind zumindest zwei mit einem ersten Abstand axial voneinander beabstandete Verbindungselemente vorgesehen, wobei die Verbindungselemente mit einem Verbindungsmittel wechselwirken und das Verbindungsmittel zwei mit einem zweiten Abstand axial voneinander versetze Ausnehmungen aufweist, wobei der erste Abstand der Verbindungselemente größer oder kleiner als der zweite Abstand der Ausnehmungen ist. Hiermit wird erreicht, dass sich die beiden Verbindungselemente über die Ausnehmungen verspannen bzw. die Relativkraft gemäß der Erfindung längs der Drehachse der Welle erzeugen. Beispielsweise kann das Verbindungsmittel als Welle bzw. Hohlwelle, Stab, Stift oder dergleichen realisiert werden. Entsprechend ist das Verbindungselement gemäß der Erfindung Vermittler zwischen den Verbindungselementen bzw. den Wellen, die zu verbinden sind.

Vorteilhafterweise weisen die beiden zu verbindenden Wellen bzw. Komponenten jeweils eine Anschlagfläche zum gegenseitigen Anschlagen auf. Mit Hilfe dieser Ausführungsform der Erfindung kann eine Verbindung zweier Wellen realisiert werden, wobei lediglich ein einziges Verbindungselement ausreicht. Hier kann das Anschlagen der beiden Wellen bzw. Komponenten bezüglich dem Verbindungselement bzw. der geneigten Kontaktfläche gemäß der Erfindung verspannt werden und somit die Relativkraft erzeugen. Entsprechend kann diese Ausführungsform besonders konstruktiv einfach und somit kostengünstig realisiert werden. Auch ist die Montage bzw. Demontage dieser Verbindungsart gemäß der Erfindung von besonderem Vorteil.

Vorzugsweise weist die erste Anschlagsfläche der ersten Welle zur Längsachse des Verbindungselementes einen dritten Abstand und die zweite Anschlagsfläche der zweiten Welle zum tiefsten Punkt der Ausnehmung einen vierten Abstand auf, wobei der dritte Abstand kleiner oder größer als der vierte Abstand ist. Entsprechend wird über die unterschiedlichen Abstände in eleganter Weise die Relativkraft in Richtung der Drehachse der Welle gemäß der Erfindung generierbar.

Generell soll die Nummerierung der zuvor genannten Abstände lediglich zur Unterscheidung dieser herangezogen werden und nicht dazu, dass alle Abstände bei einer Ausführungsform verwirklicht werden müssen. Das bedeutet, dass beispielsweise lediglich der dritte und der vierte Abstand bei einer Ausführungsform vorhanden sind und die beiden ersten Abstände gemäß der Erfindung nicht vorhanden sein müssen. Vielmehr werden zumeist die beiden ersten Abstände bei einer ersten Ausführungsform der Erfindung und die beiden letztgenannten, d.h. der dritte und der vierte Abstand bei einer zweiten bzw. anderen Ausführungsform der Erfindung verwendet.

In einer besonderen Ausführungsform der Erfindung ist die Verbindungsvorrichtung zum Verbinden der Motorantriebswelle mit einer Zwischenwelle wie z.B. einer Transportwelle, insbesondere einer Vorförderschnecke, oder einer Gelenkwelle etc. oder unmittelbar mit der Schneckenrotorwelle ausgebildet. Alternativ oder in Kombination hierzu ist die Verbindungsvorrichtung zum Verbinden der Zwischenwelle mit der Schneckenrotorwelle ausgebildet. Es hat sich in der Praxis gezeigt, dass gerade die zuvor genannten Wellenverbindungen von besonderen Vorteil sind, insbesondere in der Lebensmittelbranche, um die Montage bzw. Demontage der entsprechenden Wellen in vorteilhafter Weise gemäß der Erfindung durchführen zu können.

Bei Exzenterschneckenpumpen werden zwischen der Motorantriebswelle des Antriebsmotors und der Schneckenrotorwelle im Allgemeinen Zwischenwellen vorgesehen. Gerade hier kann die Erfindung in vorteilhafter Weise die entsprechenden Schnittstellen miteinander verbinden. Bei der Verarbeitung bzw. Behandlung von Flüssigkeiten bzw. sehr fließfähigen Medien weisen derartige Zwischenwellen im Allgemeinen keine Transportfunktion auf. Hier sind diese Zwischenwellen häufig als Gelenkwellen wie z.B. Kardangelenke oder dergleichen ausgebildet. Die Flüssigkeiten bzw. sehr fließfähigen Medien fließen hierbei vom Einfüllbereich bzw. -öffnung der Pumpe mittels Gewichtskraft bzw. durch den Unterdruck der Schneckenrotorwelle zu dieser hin.

Dagegen wird beispielsweise bei hochviskosen Medien wie Pasten oder dergleichen die Zwischenwelle mit einer Transportfunktion versehen, d.h. als Transportwelle vorzugsweise mit einer Transportwendel oder dergleichen ausgebildet. Hierdurch kann das Medium wirkungsvoll von der Einfüllöffnung bzw. -bereich zur Schneckenrotorwelle weiterbefördert werden.

Generell ist es erfindungsgemäß möglich, eine drehfeste Verbindung zu realisieren. Beispielsweise sind die beiden Verbindungselemente mittels dem Verbindungsmittel miteinander, insbesondere axial verspannt. Gemäß der Erfindung wird eine Zentrierung und axiale Verspannung der zu montierenden Komponenten durch den Montagevorgang erreicht, d.h. durch Einbringen des/der Verbindungselemente. Durch den etwas verkürzten Abstand, d.h. insbesondere den zweiten Abstand, der Ausnehmungen, insbesondere Bohrungen, des Verbindungsmittels bzw. der Verbindungswelle kommt es bei der Montage zu einer axialen Verspannung der Einzelteile, wie z.B. Verbindungsmittel und Motorantriebswelle. Ist die Endposition des/der Verbindungselemente bzw. Verbindungsschrauben erreicht, übertragen das/die Verbindungselemente die Drehmomente an der Motorwelle bzw. Antriebswelle.

Gemäß der Erfindung wird die exakte Montage deutlich vereinfacht bzw. verbessert, da keine Fluchtungsfehler wie beim Stand der Technik berücksichtigt werden müssen.

Vor allem die Ausnehmungen, insbesondere Bohrungen, auf dem Verbindungsmittel bzw. der Verbindungswelle können sehr exakt verwirklicht bzw. angebracht werden. Entsprechend kann der Versatz bzw. der etwas kleinere oder größere Abstand des Verbindungsmittels sehr exakt gefertigt werden. Auch die Ausnehmungen der Verbindungselemente, der Motorantriebswelle etc. können exakt am dafür vorgesehenen Ort realisiert werden, wodurch auch der/die entsprechenden Abstände sehr exakt verwirklicht werden können. Der Versatz aufgrund der unterschiedlich großen Abstände ist entsprechend exakt.

### Ausführungsbeispiel

Ein Ausführungsbeispiel der Erfindung ist in der Zeichnung dargestellt und wird anhand der einzigen Figur nachfolgend näher erläutert.

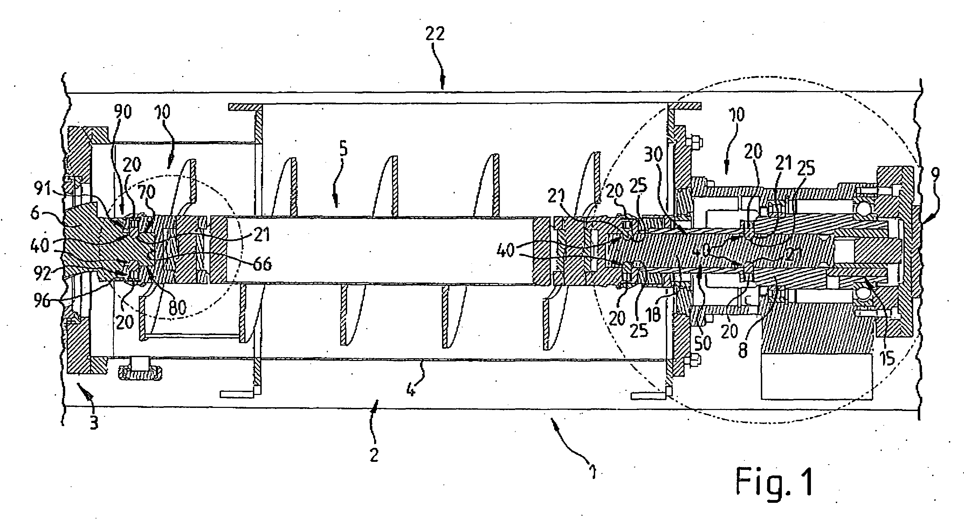

Die Exzenterschneckenpumpe 1 gemäß Figur 1 umfasst ein Pumpengehäuse 2 mit Öffnung 22, das aus verschiedenen Gehäuseelementen wie dem Stator 3 und dem Sauggehäuse 4 zusammengesetzt ist. Im Innern des Gehäuses 2 ist eine Rotoreinheit 5 untergebracht, die aus verschiedenen Rotorelementen, wie z.B. dem Schneckenrotor 6, einer Kardangelenkwelle und einer Pumpenantriebswelle 8 bzw. der sog. Ausrückwelle 18 besteht. Die Pumpenantriebswelle 8 ist mit einem eine Motorwelle 15 antreibenden Antriebsmotor 9 form- bzw. kraftschlüssig gekoppelt.

Das Pumpgut wird über eine Öffnung 22 der Transportschraube bzw. Vorförderschnecke 5 zugeführt und bei Drehung des Motors 9 in Richtung des Schneckenrotors 6 transportiert und von diesem in bekannter Weise weitergepumpt.

Gemäß der Erfindung sind zwei Verbindungen 10 vorgesehen, die ein bzw. zwei Verbindungselemente 20 bzw. sog. Kugelschrauben 20 aufweisen. Das Verbindungselement 20 bzw. die Kugelschraube weist an einem Ende einen Kugelabschnitt bzw. eine Kugel 21 auf, der/die eine zur Längsachse des Verbindungselementes 20 geneigte Kontaktfläche 25 aufweist.

Die zweimal zwei, jeweils wechselwirkenden Kugelschrauben 20 gemäß der rechts dargestellten Variante sind zueinander mit einem ersten Abstand 30 voneinander beabstandet. Eine Ausrückwelle 18 weist entsprechende Ausnehmungen bzw. Bohrungen 40 auf, die axial mit einem zweiten Abstand 50 voneinander beabstandet sind. Der Abstand 50 der Bohrungen 40 ist kleiner als der Abstand 30 der Kugelschrauben 20, so dass sich im montierten Zustand der Kugelschrauben 20 eine Verspannung zwischen diesen und der Ausrückwelle 18 ergibt. Dies führt zu einer exakten axialen Ausrichtung bzw. Fluchtung sowie zu einer exakten Zentrierung der Komponenten und über die Kugelschrauben 20 auch zu einer Übertragung des Drehmomentes des Motors 9 auf die Transportschraube bzw. den Schneckenrotor 6.

Zudem ist zwischen der Vorförderschnecke 5 und Schneckenrotor 6 ebenfalls eine vorteilhafte Kugelschrauben 20 umfassende Verbindung 10 vorgesehen, die mittels zweier in vorteilhafter Weise unterschiedlich großer Abstände 70, 80 der Ausnehmungen 40 des Schneckenrotors 6 und der Vorförderschnecke 5 zu stirnseitigen Anschlagsflächen 66 ebenfalls zu einer vorteilhaften Verspannung und Ausrichtung führt. Hierbei weisen der Schneckenrotor 6 und die Vorförderschnecke 5 jeweils eine Anschlagsfläche 66 auf, mittels derer die Verspannung bzw. die Relativkraft gemäß der Erfindung übertragen wird.

Vor allem aus konstruktiven Gründen ist es von Vorteil, diese Verbindung derart auszubilden, dass an einem Versatz 90 des Schneckenrotors 6 die Verspannung bzw. der Anschlag, d.h. eine entsprechende Anschlagsfläche 96 realisiert wird. Dementsprechend sind zwei in vorteilhafter Weise unterschiedlich große Abstände 91 und 92 einer Anschlagsfläche 96 zur Bohrung 40 des Schneckenrotors 6 bzw. zur Kugelschraube 20 vorzusehen.

In der Figur sind dementsprechend zwei unterschiedliche Varianten gemäß der Erfindung dargestellt, eine erste mit nur einem (längs der Richtung der Drehachse der Wellen vorgesehenen) Verbindungselement 20 bzw. einer Kugelschraube 20 (links abgebildet) und.eine zweite mit zwei (längs der Richtung der Drehachse der Wellen vorgesehenen) Verbindungselementen 20 bzw. Kugelschrauben 20. Diese beiden Varianten sind jeweils mit einem Strich-Zwei-Punkt-Kreis markiert.

Darüber hinaus kann auch die Verbindungsart gemäß der in Figur 1 auf der linken Seite dargestellten Variante für die rechts dargestellte Verbindung verwendet werden oder entsprechend umgekehrt. D.h., dass der Schneckenrotor 6 mittels zweier axial versetzter Verbindungselemente 20 mit der Vorförderschnecke 5 und diese lediglich mit nur einem Verbindungselement 20 mittels eines entsprechenden Anschlags z.B. mit der Ausrückwelle 18 verbunden werden könnte.

Beide Varianten weisen gemäß Figur 1 auf sich gegenüberliegenden Seiten der jeweiligen Welle, d.h. an etwa gleicher Position längs der Richtung der Drehachse der Welle, ein jeweils gleichwirkendes Verbindungselement 20 bzw. Kugelschraube 20 auf, um die vorteilhafte Übertragung des Drehmomentes zwischen den Komponenten bzw. Wellen zu gewährleisten.

Um die Verbindung noch vorteilhafter auszugestalten können die Verbindungselemente 20 radial, d.h. in Bezug zum Querschnitt, um z.B. etwa 120° zueinander versetzt bzw. verdreht werden. Hiermit wird eine definierte Anschlagsposition der innen liegenden Welle erreicht, insbesondere der Ausrückwelle 18 oder ggf. des Schneckenrotors 6. Das bedeutet, dass die Ausrückwelle 18 im vorgenannten Fall an einer um wiederum etwa 120° zu den Verbindungselementen 20 versetzt angeordneten Stelle der Pumpenantriebswelle 8 anschlägt. Es hat sich herausgestellt, dass eine derart vordefinierte Lage der gemäß der Erfindung zu verbindenden Wellen von besonderem Vorteil im Betrieb sind.

## Patentansprüche

1. Exzenterschneckenpumpe mit einem eine Motorantriebswelle umfassenden Antriebsmotor (9) zum Antreiben einer wenigstens eine Schneckenrotorwelle (6) aufweisenden Rotoreinheit, wobei wenigstens eine Verbindungsvorrichtung (10) zum Verbinden zweier, um eine Drehachse drehende Wellen (5, 6, 8, 18), insbesondere der Motorantriebswelle mit der Rotoreinheit, vorgesehen ist, wobei die Verbindungsvorrichtung (10) wenigstens ein quer zur Drehachse und in Richtung einer Längsachse ausgerichtetes sowie wenigstens teilweise eine der Wellen (5, 6, 8, 18) durchsetzendes Verbindungselement (20) aufweist, wobei wenigstens eine der Wellen (5, 6, 8, 18) mindestens eine Ausnehmung (40) zur wenigstens teilweisen Aufnahme des Verbindungselementes (20) aufweist, **dadurch gekennzeichnet, dass** das Verbindungselement (20) und/oder die Ausnehmung (40) der Welle (5, 6, 8, 18) eine gegenüber der Lage der Längsachse des Verbindungselementes (20) in montierter Position des Verbindungselementes (20) derart geneigte Kontaktfläche (25) aufweist, dass dadurch beim Einbringen des Verbindungselementes (20) in die Ausnehmung (40) der Welle (5, 6, 8, 18) eine Relativkraft zwischen Verbindungselement (20) und Welle (5, 6, 8, 18) mit einer Komponente in Richtung der Drehachse der Welle (5, 6, 8, 18) generierbar ist.

2. Exzenterschneckenpumpe nach Anspruch 1, **dadurch gekennzeichnet, dass** das Verbindungselement (20) wenigstens einen Endbereich mit einem die Kontaktfläche (25) umfassenden Kugelabschnitt (21) aufweist.

3. Exzenterschneckenpumpe nach einem der vorgenannten Ansprüche, **dadurch gekennzeichnet, dass** das Verbindungselement (20) wenigstens einen Endbereich mit einem die Kontaktfläche (25) umfassenden Konus aufweist.

4. Exzenterschneckenpumpe nach einem der vorgenannten Ansprüche, **dadurch gekennzeichnet, dass** der Endbereich eine Kugel (21) umfasst.

5. Exzenterschneckenpumpe nach einem der vorgenannten Ansprüche, **dadurch gekennzeichnet, dass** das Verbindungselement (20) als Schraube (20) ausgebildet ist.

6. Exzenterschneckenpumpe nach einem der vorgenannten Ansprüche, **dadurch gekennzeichnet, dass** die Ausnehmung (20) der Welle (5, 6, 8, 18) als Sackloch (40) ausgebildet ist..

7. Exzenterschneckenpumpe nach einem der vorgenannten Ansprüche, **dadurch gekennzeichnet, dass** ein Versatz zwischen der Längsachse des Verbindungselementes (20) und einem tiefsten Punkt der Ausnehmung (40) vorgesehen ist.

8. Exzenterschneckenpumpe nach einem der vorgenannten Ansprüche, **dadurch gekennzeichnet, dass** der tiefste Punkt im Wesentlichen in der Mitte der Ausnehmung (40) angeordnet ist.

9. Exzenterschneckenpumpe nach einem der vorgenannten Ansprüche, **dadurch gekennzeichnet, dass** zumindest zwei mit einem ersten Abstand (30) axial voneinander beabstandete Verbindungselemente (20) vorgesehen sind, wobei die Verbindungselemente (20) mit einem Verbindungsmittel (18) wechselwirken und das Verbindungsmittel (18) zwei mit einem zweiten Abstand (50) axial voneinander versetzten Ausnehmungen (40) aufweist, wobei der erste Abstand (30) der Verbindungselemente (20) größer oder kleiner als der zweite Abstand (50) der Ausnehmungen (40) ist.

10. Exzenterschneckenpumpe nach einem der vorgenannten Ansprüche, **dadurch gekennzeichnet, dass** die beiden zu verbindenden Wellen (5, 6, 8, 18) jeweils eine Anschlagsfläche (66) zum gegenseitigen Anschlagen aufweisen.

11. Exzenterschneckenpumpe nach einem der vorgenannten Ansprüche, **dadurch gekennzeichnet, dass** die erste Anschlagsfläche (66) der ersten Welle (5, 6, 8, 18) zur Längsachse des Verbindungselementes (20) einen dritten Abstand (70) und dass die zweite Anschlagsfläche (66) der zweiten Welle (5, 6, 8, 18) zum tiefsten Punkt der Ausnehmung (40) einen vierten Abstand (80) aufweisen, wobei der dritte Abstand (70) kleiner als der vierte Abstand (80) ist.

12. Exzenterschneckenpumpe nach einem der vorgenannten Ansprüche, **dadurch gekennzeichnet, dass** die Verbindungsvorrichtung (10) zum Verbinden der Motorantriebswelle (15) mit einer Zwischenwelle (5) oder der Schneckenrotorwelle (6) ausgebildet ist.

13. Exzenterschneckenpumpe nach einem der vorgenannten Ansprüche, **dadurch gekennzeichnet, dass** die Verbindungsvorrichtung (10) zum Verbinden der Zwischenwelle (5) mit der Schneckenrotorwelle (6) ausgebildet ist.
